(19) **Europäisches Patentamt**
**European Patent Office**
**Office européen des brevets**

(11) Publication number : **0 254 882 B1**

(12) # EUROPEAN PATENT SPECIFICATION

(45) Date of publication of patent specification :
**21.11.91 Bulletin 91/47**

(51) Int. Cl.$^5$ : **G01N 29/00, G01N 29/02**

(21) Application number : **87109243.3**

(22) Date of filing : **26.06.87**

(54) **Particle detector.**

(30) Priority : **07.07.86 US 882399**

(43) Date of publication of application :
**03.02.88 Bulletin 88/05**

(45) Publication of the grant of the patent :
**21.11.91 Bulletin 91/47**

(84) Designated Contracting States :
**DE FR GB**

(56) References cited :
**DE-A- 3 147 421**
**GB-A- 1 435 972**
**US-A- 4 149 415**

(73) Proprietor : **Jonas, Otokar**
**1113 Faun Road**
**Wilmington Delaware 19803 (US)**

(72) Inventor : **Jonas, Otokar**
**1113 Faun Road**
**Wilmington Delaware 19803 (US)**

(74) Representative : **Wagner, Karl H. et al**
**WAGNER & GEYER Patentanwälte**
**Gewürzmühlstrasse 5 Postfach 246**
**W-8000 München 22 (DE)**

EP 0 254 882 B1

## Description

## BACKGROUND OF THE INVENTION

### 1. Field of the Invention

This invention relates to, and has as its principal object, the provision of a novel device for measuring by acoustic means, the number and mass of individual particles borne in a fluid stream. Particular application of the invention is seen in the detection and characterization of particles in steam, especially superheated steam, water droplets in steam, dirt be an all stream, and particles in flue gases.

### 2. Prior Art

British Patent specification 1 435 972 teaches a device for detecting the presence of particulate material in a fluid stream flowing in a conduit. The device, which is directed to the detection of sand in crude oil and natural gas streams, comprises an acoustical detector disposed in the conduit. The detector, having a resonant frequency in excess of 100 kHz, produces an output signal corresponding to the vibratory energy produced by particle impact on the detector. The detector comprises a piezo-electric transducer confined in a cylindrical probe filled with oil. The probe is placed at right angles to the stream.

U.S. Patent 4.149.415 teaches a device for distinguishing wheat grains from mixture of straw and chaff. The device comprises a flat plate target disposed at right angles to the stream of particles in air. Attached to the downstream side of the plate are transducers inter alia which generate electrical signals corresponding to particle impacts on the plate. Resultant signals are electronically processed whereby to distinguish grain from straw and chaff. Spurious signals are suppressed electrically and transducers are mounted with opposite polarities whereby fundamental and odd harmonic modes cancel out.

The patent teaches against the use of a prior art cylindrical probe because the sensitivity varies across the width of the cylinder due the variation in the impact angle.

DE-A-31 47 421 discloses a method and apparatus for detecting bubbles in a liquid. The apparatus comprises a grid-like target against which the bubbles impact and cause a generation of acoustic signals. Said acoustic signals are transmitted by a coupling member to means for converting said acoustic signals into electrical signals, which are supplied to electronic analysing means.

## SUMMARY OF THE INVENTION

In accordance with the invention a device for monitoring the number and mass of individual particles borne in a flowing fluid stream of predetermined flow rate is provided and comprises:

(a) a target in said stream whereon an essentially constant predetermined fraction of said particles impacts, said target being flat and so oriented as to cause said particles to impact on said target at essentially the same angle $\alpha$ defined between the axis of said stream and the flat surface of the target in the range of 20° to 60° whereby to produce acoustic signals proportional to the kinetic energy of the particles, and discourage accumulation of particles on said target;

(b) means comprising a cylindrical probe for transmitting said acoustic signals out of said stream;

(c) means outside said stream for converting said acoustic signal to corresponding electric signals;

(d) electronic means responsive to said electric signals for processing said signals whereby to provide an estimate of the total number and the mass of the individual particles; and

(e) one to two compensating probes cooperating with the electronic means of (d) to subtract out extraneous noise signals.

Preferred embodiments of the invention are disclosed in the dependent claims.

## BRIEF DESCRIPTION OF THE DRAWINGS

Fig. 1 shows a conduit confining a fluid stream containing particles and, in assembly A, passing through the wall of said conduit, an impact detecting probe of the invention comprising a target. Optional assemblies B and C are compensating probes which do not pass through the conduit wall.

Fig. 2 is a diagram showing schematically the cooperation of the probes of Fig. 1 with electronic means for processing the signals generated by piezo-electric transducers at the probes.

## DESCRIPTION OF THE PREFERRED EMBODIMENTS

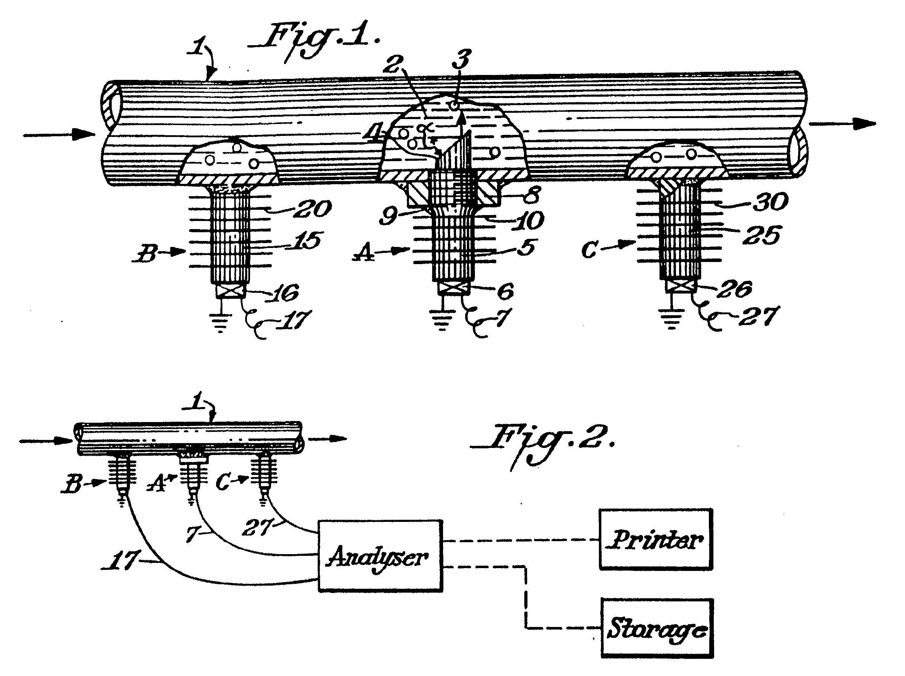

Turning now to Fig. 1, one sees a pipe conduit 1 carrying a fluid stream 2 such as steam, water, or air, said stream moving, as indicated in the drawing, from left to right. The stream contains particles 3 such as spalled metal oxide products or say water droplets in a stream of steam, or dirt in a stream of air. In connection with assembly A, it is seen that some of the particles 3 strike target 4, an eliptical surface, thus elastically deforming it and generating acoustic signals in the 100 to 900 kHz range. The impact angle, $\alpha$, is essentially constant. Said signals are transferred via cylindrical detecting probe 5 to piezo-electric transducer 6 which converts the acoustic signals to electrical signals. The signals are brought to the electronic analyzer of Fig. 2 via ground and lead 7.

Cylindrical probe 5 in this embodiment is secured by threads in boss 8 which is welded to conduit 1. A tight fit is provided by seal weld 9. Other means, as will occur to the artisan, are operable.

Fins 10 are optional and are not needed in moderate temperature applications. However, in high temperature service, for example when the conduit carries superheated steam at 540°C, the fins are useful for dissipating heat so as not to overheat transducer 6.

Assemblies B and C are optional compensating probes. They do not pass through the wall of conduit 1 but are instead, in this embodiment, welded thereto. The components of assembly B are assigned numbers corresponding to those of assembly A to which 10 is added; in assembly C, 20 is added.

The materials employed in the probe assemblies are selected to possess mechanical and chemical stability appropriate to the circumstances of their use. Common metals and alloys are operable. Preferred for many uses are brass, bronze, titanium, and alloy steel. Most preferred are stainless steels. The metals and alloys should preferably not undergo plastic deformation and should not excessively damp the acoustic signals generated by impact of the monitored particles.

The target (component 4) of the detecting probe is a surface so arranged as to intercept particles at a constant angle thus generating acoustic signals which are proportional to the kinetic energy of the particles, without accumulating particles thereon. In this invention this result is accomplished by presenting a target surface to the flowing fluid stream which at all points makes a fixed angle $\alpha$ with the axis of the stream. The preferred angles are from about 20 to about 60°, about 40° being most preferred. It is convenient to provide a flat eliptical surface as shwon in Fig. 1 by machining a flat surface on a piece of cylindrical stock at the selected angle. Other methods will occur to the machinist. Small angles are selected if particles tend to collect on the surface; larger angles if greater sensitivity is needed. Further, depending on the nature of the particles, it may be desirable to polish the surface and/or to deposit on the target a hard material such as a stellite alloy. The target can also comprise more than one surface, so long as all particles strike it at essentially the same angle; for example, the target may have the form of a wedge.

Transducers 6, 16 and 26 are commercially available acoustic emission piezo-electric transducers normally in a housing comprising a wear plate. They may have a resonant frequency in the range of 100 to 900 kHz. The resonant frequency is normally selected to the generally outside the noise frequencies of the monitored system. Such transducers are sold by Physical Acoustic Corporation, Princeton, N. J., among others. The wear plate of the transducers is elastically coupled, e.g. by means of adhesive or heavy grease, to the end of the cylinder cylindrical probe.

Turning now to Fig. 2 one sees schematically the cooperation of invention assembly A with assemblies B and C, and art analyser and associated printing and storage devices.

The Physical Acoustics Corporation offers sophisticated analysers called the Series 3000 Acoustic Emission Analysers. Such analysers are capable inter alia of subtracting extraneous noise signals detected by the compensating probes from the signal generated by a detecting probe of the invention. Such systems are especially useful in monitoring steam lines, for example.

The Physical Acoustic Emission Corporation also offers a less sophisticated one-probe analyser called the Count Rate Analyser Model 4300. This device has a built-in band of eight electronic filters, total amplification of 100 dB and three signal processors which produce DC voltage signals proportional to the energy, and the number of impacts. The analyser also comprises a clock allowing monitoring as a function of time, and a variable threshold for each parameter.

In as much as the target occupies a fixed and measurable fraction of the cross sectional area of the conduit, it follows semiquantitatively that the number of impacts on the target over time will be a constant calculable fraction of the total number of particles passing through the conduit. Most monitored particles, being substantially more dense than the fluid, are not deflected around the target by the fluid flow around the target.

The combination, of which the invention detecting probe is a part, is capable not only of counting the total number of particles striking the targets as set out above but can also, following calibration, estimate the mass of the individual particles by means of the amplitude of the impact signals. Calibration can be carried out in a number of ways. For example, a simple pendulum, say a steel shot of known mass attached to a string of negligable mass is allowed to fall through a known arc and strike the probe of an isolated detecting probe at the angle employed in service. From classic physics the kinetic energy, $1/2\, mv^2$, is calculated knowing the potential energy, $mhg$, where m = the mass of the shot; h = the height of the shot above the target; g = the gravitational constant; and v is the calculated impact velocity. Knowing the velocity of the stream, which includes the particles, by art measurement means outside the invention, the mass of the particles can be computed. Other calibrating means such as allowing a ball of known mass to strike the target after rolling down a tube from a known height will occur to they engineer.

Although compensating probes are not absolutely necessary to operability, it is preferred to employ at least one, preferably situated upstream

fror: e detecting probe. It is, however, most preferred employ two compensating probes, one upsti.am and one downstream from the detecting probe, as shown in Fig. 2.

The distance apart may vary with the application. In superheated steam service/employing a cylindrical conduit a uniform distance between probes of about four diameters or at least about 12 inches (30.x5 cm) to give adequate time between signals is preferred.

## Claims

1. A device for monitoring the number and mass for individual particles (3) borne in a flowing fluid stream (2) of predetermnied velocity comprising:

(a) a target (4) in said stream (2) whereon an essentially constant predetermined fraction of said particles (3) impacts, said target (4) being flat and so oriented as to cause said particles (3) to impact on said target (4) at essentially the same angle $\alpha$ defined between the axis of said stream (2) and the flat surface of the target (4) in the range of 20° to 60° whereby to produce acoustic signals proportional to the kinetic energy of the particles (3), and discourage accumulation of particles on said target (4);

(b) means (A) comprising a cylindrical probe (5) for transmitting said acoustic signals out of said stream (2);

(c) means (6) outside said stream (2) for converting said acoustic signal to corresponding electric signals;

(d) electronic means responsive to said electric signals for processing said signals whereby to provide an estimate of the total number and the mass of the individual particles (3); and

(e) one to two compensating probes (15, 25) cooperating with the electronic means of (d) to subtract out extraneous noise signals.

2. The device of claim 1 wherein the cylindrical probe (5) and target (4) are fabricatied from a metal selected from the group consisting of brass, bronze, titanium and alloy and stainless steel.

3. The device of claim 1 or 2 wherein the angle $\alpha$ is about 40°.

4. The device of anyone of claims 1 - 3 wherein the means (6) for converting acoustic signals to corresponding electric signals is a piezo-electric transducer.

5. The device of claim 4 wherein the piezo-electric transducer has a resonant frequency in the range of 100 to 900 kHz.

6. The device of anyone of claims 1-5, wherein a hard material is deposited on the target (4).

## Patentansprüche

1. Vorrichtung zur Überwachung der Anzahl und Masse individueller Teilchen (3) in einem fließenden Strömungsmittelstrom (2) von vorbestimmter Geschwindigkeit, wobei folgendes vorgesehen ist:

(a) ein Zieltarget (4) in dem Strom (2), worauf ein im wesentlichen konstanter, vorbestimmter Teil der Teilchen (3) auftrifft, wobei das Zieltarget (4) flach und derart orientiert ist, daß die Teilchen (3) veranlaßt werden auf das Zieltarget (4) unter im wesentlichen dem gleichen Winkel alpha aufzutreffen, der definiert ist zwischen der Achse des Stroms (2) und der flachen Oberfläche des Zieltarget (4) im Bereich von 20 bis 60 Grad, wodurch akustische Signale erzeugt werden, proportional zur kinetischen Energie der Teilchen (3) und die Akkumulation von Teilchen an dem Zieltarget (4) verhindert wird;

(b) Mittel (A), die eine zylindrische Sonde (5) aufweisen zur Übertragung der akustischen Signale aus dem Stom (2). heraus;

(c) Mittel (6) außerhalb des Stroms (2) zur Umwandlung des akustischen Signals in entsprechende elektrische Signale;

(d) elektronische Mittel ansprechend auf die elektrischen Signale zur Verarbeitung der Signale, wodurch eine Schätzung der Gesamtzahl und der Masse der individuellen Teilchen (3) vorgesehen wird; und

(e) ein bis zwei Kompensationssonden (15, 25) zusammenarbeitend mit den elektronischen Mitteln von (d) zum Heraussubtrahieren von externen Rauschsignalen.

2. Vorrichtung nach Anspruch 1, wobei die zylindrische Sonde (5) und das Zieltarget (4) aus einem Metall hergestellt sind, ausgewählt aus der folgenden Gruppe: Messingbronze, Titan und Legierungen davon, sowie rostfreier Stahl.

3. Vorrichtung nach Anspruch 1 oder 2, wobei der Winkel alpha ungefähr 40° beträgt.

4. Vorrichtung nach einem der Ansprüche 1 bis 3, wobei die Mittel (6) zur Umwandlung der akustischen Signale in entsprechende elektrische Signale einen piezoelektrischen Wandler aufweisen.

5. Vorrichtung nach Anspruch 4, wobei der piezoelektrische Wandler eine Resonanzfrequenz im Bereich von 100 bis 900 kHz besitzt.

6. Vorrichtung nach einem der Ansprüche 1 bis 5, dadurch gekennzeichnet, daß ein Hartmaterial auf dem Zieltarget (4) abgeschieden ist.

## Revendications

1. Dispositif pour contrôler le nombre et la masse de particules individuelles (3) entraînées dans un écoulement de fluide en circulation (2) possédant une vitesse prédéterminée, comprenant :

(a) une cible (4), qui est située dans ledit écoulement (2) et que vient frapper une fraction prédéterminée, sensiblement constante, desdites particules (3), ladite cible (4) étant plate et orientée de manière que lesdites particules (3) frappent ladite cible (4) sensiblement sous le même angle α défini entre l'axe dudit écoulement (2) et la surface plate de la cible (4), et situé dans une gamme de 20° à 60°, ce qui permet de produire des signaux acoustiques proportionnels à l'énergie cinétique des particules (3) et s'oppose à l'accumulation de particules sur ladite cible (4) ;

(b) des moyens (A) comprenant une sonde cylindrique (5) servant à émettre lesdits signaux acoustiques en direction de l'extérieur dudit écoulement (2) ;

(c) des moyens (6) situés à l'extérieur dudit écoulement (2) pour convertir ledit signal acoustique en des signaux électriques correspondants ;

(d) des moyens électroniques répondant auxdits signaux électriques pour traiter lesdits signaux de manière à fournir une estimation du nombre total et de la masse des particules individuelles (3) ; et

(e) une ou deux sondes de compensation (15, 25) coopérant avec les moyens électroniques de (d) pour éliminer des signaux de bruit externes.

2. Dispositif selon la revendication 1, dans lequel la sonde cylindrique (5) et la cible (4) sont réalisées en un métal choisi dans le groupe comprenant le laiton, le bronze, le titane et ses alliages, et un acier inoxydable.

3. Dispositif selon la revendication 1 ou 2, dans lequel l'angle α est égal à environ 40°.

4. Dispositif selon l'une quelconque des revendications 1 à 3, dans lequel les moyens (6) pour convertir des signaux acoustiques en des signaux électriques correspondant comprennent un transducteur piezoélectrique.

5. Dispositif selon la revendication 4, dans lequel le transducteur piézolectrique possède une fréquence de résonance comprise dans la gamme allant de 100 à 900 kHz.

6. Dispositif selon l'une quelconque des revendications 1 à 5, dans lequel un matériau dur est déposé sur la cible (4).

Fig.1.

Fig.2.